# EUROPÄISCHE PATENTSCHRIFT

(11) **EP 4 054 302 B1**
(45) Veröffentlichungstag und Bekanntmachung des Hinweises auf die Patenterteilung: **14.08.2024**
(21) Anmeldenummer: 20800864.9
(22) Anmeldetag: 02.11.2020
(51) Int. Cl.: A01B 3/46

(54) **ANBAUDREHPFLUG**
MOUNTED TURNOVER PLOUGH
CHARRUE RÉVERSIBLE PORTÉE

(30) Priorität: 07.11.2019 DE 102019129988
(43) Veröffentlichungstag der Anmeldung: 14.09.2022
(73) Patentinhaber: Amazonen-Werke H. Dreyer SE & Co. KG, 49205 Hasbergen (DE)
(72) Erfinder: PRANGEMEIER, Dominik, 49549 Ladbergen (DE); AHRING, Sören, 49214 Bad Rothenfelde (DE)
(86) Internationale Anmeldenummer: PCT/EP2020/080616
(87) Internationale Veröffentlichungsnummer: WO 2021/089446

(56) Entgegenhaltungen:
- EP-B1- 1 449 417
- DE-A1- 102012 103 667
- GB-A- 2 003 012

## Beschreibung

Die Erfindung betrifft einen Anbaudrehpflug gemäß dem Oberbegriff des Patentanspruches 1.

Ein derartiger Anbaudrehpflug ist in DE 10 2012 103 667 A1 offenbart. Die GB 2 003 012 A offenbart einen weiteren Anbaudrehpflug bei dem das Stützrad über eine Befestigungsvorrichtung am Pflugrahmen angeordnet ist und mittels eines Arbeitstiefeneinstellorgans in verschiedene Arbeitstiefen einstellbar ist.

Ein weiterer Anbaudrehpflug ist in EP 1 449 417 B1 beschrieben. Dieser Anbaudrehpflug umfasst einen Pflugrahmen an dem an zwei gegenüberliegenden Seiten Pflugkörper angebracht sind. Der Pflugrahmen ist mittels zumindest eines Wendezylinders um eine liegende, im Wesentlichen in Fahrtrichtung weisende Wendeachse gegenüber einem Anbaubock wendbar, so dass wahlweise die eine oder die andere Seite von Pflugkörpern zur Bodenbearbeitung genutzt werden kann. Der Anbaubock schließt sich an dem vorderen Ende des Pflugrahmens an und dient der Kopplung des Anbaudrehpfluges mit einer landwirtschaftlichen Zugmaschine.

Der Anbaudrehpflug umfasst ferner ein an einem Radarm angeordnetes Stützrad, welches über eine Befestigungsvorrichtung wiederum an dem Pflugrahmen angeordnet ist. Die Befestigungsvorrichtung umfasst neben dem Radarm eine quer zur Wendeachse liegende Drehachse, ein Arbeitstiefeneinstellorgan, einen Umsteckmechanismus und eine lösbare Verriegelungsvorrichtung. Das Arbeitstiefeneinstellorgan ist bei diesem Anbaudrehpflug als Hydraulikzylinder und die Drehachse als durchgehende Schwenkwelle ausgeführt, wobei die Schwenkwelle quer zur Fahrtrichtung steht. Die Befestigungsvorrichtung dient also der Befestigung des Stützrades am Pflugrahmen und dessen Verstellung gegenüber dem Pflugrahmen.

Der Radarm ist schwenkbar an dem dem Pflugrahmen abgewandten Ende der Drehachse angelenkt, so dass das Stützrad mittels des Arbeitstiefeneinstellorgans in beide Arbeitsstellungen auf gegenüberliegende Seiten des Pflugrahmens bewegbar ist. Das Stützrad schwenkt dabei über den Radarm um die Drehachse. Das Arbeitstiefeneinstellorgan steht hierzu bei diesem Anbaudrehpflug über die durchgehende Schwenkwelle in Wirkverbindung mit dem Stützrad. Um das Arbeitstiefeneinstellorgan aus der Wirkverbindung mit dem Stützrad zu bringen, ist die lösbare Verriegelungsvorrichtung vorgesehen. Die Kopplung zwischen Arbeitstiefeneinstellorgan und Radarm, die bei diesem Anbaudrehpflug über die Schwenkwelle gewährleistet ist, kann durch Lösen der Verriegelungsvorrichtung aufgehoben werden, so dass der Radarm frei um die Drehachse am Pflugrahmen schwenken kann. Die Verriegelungsvorrichtung ist hierzu bei diesem Anbaudrehpflug als Stiftverbindung ausgeführt.

Der Radarm ist ferner über den Umsteckmechanismus an der Drehachse angeordnet. Der Umsteckmechanismus weist eine sich quer zur Drehachse erstreckende Gelenkachse auf, um die der Radarm gegenüber der Drehachse in eine Transportstellung schwenkbar ist. Hierzu ist es bei diesem Anbaudrehpflug notwendig die Verriegelungsvorrichtung zu lösen.

In nachteiliger Weise ist es bei diesem Anbaudrehpflug folglich so, dass ein Lösen der Verriegelungsvorrichtung gleichermaßen das Arbeitstiefeneinstellorgan mit dem Stützrad außer Wirkverbindung bringt, der Radarm also gegenüber der Drehachse frei schwenkbar ist, und den Umsteckmechanismus freigibt, wodurch der Radarm quer zur Drehachse um die Gelenkachse schwenkbar ist. Um das Stützrad aus der Transportstellung zurück in eine der Arbeitsstellungen zu verbringen ist es somit notwendig den Radarm sowohl gegenüber der Gelenkachse als auch gegenüber der Drehachse in geeigneter Stellung zu halten, so dass die Blockierstellung der Verriegelungsvorrichtung für den Arbeitsbetrieb wieder hergestellt werden kann. Dies ist besonders nachteilig, da das Stützrad und der Radarm je nach Arbeitsumfeld stark verschmutzt und für den Benutzer schwer und unhandlich sind.

Die der Erfindung zugrundeliegende Aufgabe besteht somit darin, einen Anbaudrehpflug mit einer verbesserten Befestigungsvorrichtung zur vereinfachten Verbringung des Stützrades zwischen Arbeits- und Transportstellung zu schaffen.

Diese Aufgabe wird erfindungsgemäß dadurch gelöst, dass die Befestigungsvorrichtung ein, vorzugsweise drehbar an der Drehachse befestigtes, Koppelelement umfasst, und dass das Arbeitstiefeneinstellorgan einerseits an dem Pflugrahmen und andererseits an dem Koppelelement und die Verriegelungsvorrichtung zwischen dem Radarm und dem Koppelelement angeordnet ist.

Die Erfindung macht sich die Erkenntnis zunutze, dass durch die Trennung von Verriegelungsvorrichtung und Umsteckmechanismus mit Hilfe des erfindungsgemäßen Koppelelementes die Verbringung des Radarms zwischen Arbeits- und Transportstellung erheblich erleichtert wird. Die Verriegelungsvorrichtung und der Umsteckmechanismus können infolge dieser Maßnahme quasi in Reihe betätigt werden, so dass der Radarm während dem Wechsel zwischen Arbeits- und Transportstellung lediglich in jeweils einer Richtung zu bewegen und zu halten ist. Die Betätigung des Umsteckmechanismus und der Verriegelungsvorrichtung sind ferner erleichtert.

Infolge der Anordnung der Verriegelungsvorrichtung zwischen dem Radarm und dem Koppelelement sind diese lösbar miteinander verriegelt, so dass das Arbeitstiefeneinstellorgan über das Koppelelement mit dem Stützrad in Wirkverbindung steht. Das Stützrad kann über das Arbeitstiefeneinstellorgan in verschiedene Zwischenstellungen verbracht werden, so dass der Pflugrahmen sich in Arbeitsstellung darauf abstützt und in der Tiefe geführt wird.

In einer vorteilhaften Weiterbildung des erfindungsgemäßen Anbaudrehpfluges ist vorgesehen, dass die Verriegelungsvorrichtung einen am Radarm oder Koppelelement angeordneten Verriegelungsbolzen und eine Aufnahme für den Verriegelungsbolzen am Koppelelement oder Radarm umfasst. Der Verriegelungsbolzen kann also entweder am Radarm oder am Koppelelement angeordnet sein, wobei die Aufnahme an dem jeweils anderen Bauteil vorgesehen ist. Vorzugsweise ist der Verriegelungsbolzen entgegen einer Federkraft verschiebbar, so dass der Verriegelungsbolzen mittels der Federkraft in Verriegelungsposition in der Aufnahme gehalten wird. Die Federkraft kann manuell, vorzugsweise werkzeuglos, überwunden werden, so dass die Verriegelungsvorrichtung von Hand für den Benutzer lösbar ist. Der Verriegelungsbolzen kann hierzu einen gut erreichbaren Handgriff und/oder Ansatz für ein Werkzeug aufweisen. Infolge dieser Weiterbildung bildet die Verriegelungsvorrichtung eine besonders einfache und zuverlässige formschlüssige Verbindung zwischen Radarm und Koppelelement aus, so dass das Arbeitstiefeneinstellorgan in zweckmäßiger Weise mit dem Radarm gekoppelt ist.

In einer besonders vorteilhaften Weiterbildung des erfindungsgemäßen Anbaudrehpfluges ist im Bereich der Aufnahme am Koppelelement oder am Radarm eine Einführhilfe angeordnet, so dass der Verriegelungsbolzen mittels des Arbeitstiefeneinstellorgans in die Aufnahme einführbar ist. Das Arbeitstiefeneinstellorgan ist dazu eingerichtet, das Koppelelement gegenüber dem Radarm, vorzugsweise um die Drehachse, auf einer Kreisbahn zu bewegen, so dass der Verriegelungsbolzen und die Aufnahme zueinander führbar sind. Die Einführhilfe kann als Führungsblech ausgeführt sein, so dass der Bolzen ausgelenkt wird und in der Aufnahme einrastet, also verriegelt. Besonders vorteilhaft ist hierbei, dass der Benutzer den Radarm mühelos mit dem Arbeitstiefeneinstellorgan koppeln kann ohne diesen von Hand zu bewegen. Er kommt somit weder mit dem Radarm, noch mit dem Stützrad, die zuweilen stark verdreckt sind, in Kontakt. Infolge dieser Weiterbildung ist das Stützrad zumindest teilweise fernbetätigbar aus der Transportstellung in die Arbeitsstellung verbringbar.

In einer bevorzugten Ausführungsform des erfindungsgemäßen Anbaudrehpfluges ist das Arbeitstiefeneinstellorgan als Hydraulikzylinder ausgeführt. Der Hydraulikzylinder kann mit einem Steuergerät der landwirtschaftlichen Zugmaschine verbunden sein, so dass die Arbeitstiefe des Anbaudrehpfluges komfortabel aus der Führerkabine der Zugmaschine einstellbar ist.

In einer anderen bevorzugten Ausführungsform des erfindungsgemäßen Anbaudrehpfluges ist vorgesehen, dass das Arbeitstiefeneinstellorgan als längenveränderliches Einstellglied und/oder, vorzugsweise hydraulischer, Dämpfer ausgeführt ist. Das längenveränderliche Einstellglied kann als mechanisches Anschlagelement ausgeführt sein, welches in einer Fangklinke am Radarm gefangen werden kann. Das Einstellglied kann als Spindel ausgeführt sein, so dass der Radarm in einstellbarer Weise auf Distanz und somit das Stützrad in der Höhe einstellbar gehalten wird. Der vorzugsweise hydraulische Dämpfer kann als Hydraulikzylinder mit zumindest einer Kolbenbohrung ausgeführt sein, so dass ein langsamer Ölaustausch zwischen Kolben- und Stangenseite stattfindet und somit eine gedämpfte Bewegung der Kolbenstange gewährleistet ist. Infolge dieser Ausführungsform(en) ist beim Wenden des Anbaudrehpfluges gewährleistet, dass zuerst das Einstellglied auf die neue Arbeitsseite fällt und anschließend von der doppelseitigen Fangklinke am Radarm, dessen Bewegung beim Wendevorgang durch den hydraulischen Dämpfer bewusst verlangsamt wird, eingefangen wird.

In einer weiteren vorteilhaften Weiterbildung des erfindungsgemäßen Anbaudrehpfluges ist vorgesehen, dass der Umsteckmechanismus einen Sicherungsstift und zumindest jeweils eine Aufnahme für den Sicherungsstift in Arbeitsstellung und in Transportstellung des Radarms umfasst, wobei je zumindest eine Aufnahme wahlweise mit zumindest einer Bohrung in und/oder neben der Drehachse in Deckung bringbar ist, so dass der Radarm mittels des Sicherungsstifts wahlweise in Arbeitsstellung oder Transportstellung gegenüber der Gelenkachse festsetzbar ist. Folglich weist der Umsteckmechanismus für die Arbeitsstellung und die Transportstellung gleichermaßen jeweils ein korrespondierendes Paar von Aufnahme und Bohrung auf mittels dem der Radarm mit Hilfe des Sicherungsstifts in der einen oder anderen Stellung gehalten wird. Infolge dieser Weiterbildung ist ein besonders einfach zu betätigender Umsteckmechanismus geschaffen.

Um eine vorteilhafte Anordnung des Stützrades unter dem Pflugrahmen in Transportstellung zu erreichen, ist in einer Weiterbildung des erfindungsgemäßen Anbaudrehpfluges der Radarm in Transportstellung gegenüber der Drehachse um etwa 90 Grad um die Gelenkachse verschwenkt. Da der Pflugrahmen in Transportstellung gegenüber den Arbeitsstellungen lediglich um 90 Grad gewendet wird, ist infolge dieser Weiterbildung erreicht, dass das Stützrad unter dem Pflugrahmen um eine aufrechte Achse beweglich angeordnet ist. Das Stützrad ist somit dazu eingerichtet den Bewegungen des Anbaudrehpfluges bzw. der landwirtschaftlichen Zugmaschine zu folgen.

In einer weiteren vorteilhaften Ausführungsform des erfindungsgemäßen Anbaudrehpfluges ist an dem Umsteckmechanismus ein Werkzeugansatz ausgebildet, über den der Radarm mithilfe eines Werkzeuges zwischen Arbeitsstellung und Transportstellung verbringbar ist. Der Werkzeugansatz kann als Schlüsselflächen für ein als Maulschlüssel ausgeführtes Werkzeug ausgeführt sein. Infolge dieser Weiterbildung ist dem Benutzer das Verbringen des Radarms zwischen Arbeits- und Transportstellung weiter erleichtert, wobei er nicht direkt mit möglicherweise infolge des Arbeitseinsatzes verdreckten Komponenten in Kontakt kommt. Diese Weiterbildung ermöglicht somit eine besondere Komfortsteigerung der Befestigungsvorrichtung.

Der erfindungsgemäße Anbaudrehpflug ist ferner vorteilhaft dadurch weitergebildet, dass das Arbeitstiefeneinstellorgan gelenkig mit dem Pflugrahmen und gelenkig mit dem, vorzugsweise der Drehachse abgewandten, freien Ende des Koppelelements verbunden ist. Durch diese Anordnung sind besonders günstige Kräfteverhältnisse geschaffen, so dass das Arbeitstiefeneinstellorgan leichtbauend ausführbar ist.

In einer weiteren vorteilhaften Weiterbildung des erfindungsgemäßen Anbaudrehpfluges ist vorgesehen, dass der Radarm in Arbeitsstellung mittels der Verriegelungsvorrichtung lösbar mit dem Koppelelement verriegelt ist. Infolge dieser Weiterbildung ist eine besonders zuverlässige Wirkverbindung zwischen Arbeitstiefeneinstellorgan und Radarm über das Koppelelement geschaffen.

Um eine besonders schnelle und einfache Verbringung des Stützrades aus Arbeitsstellung in Transportstellung zu erreichen, ist in einer vorteilhaften Weiterbildung des erfindungsgemäßen Anbaudrehpfluges vorgesehen, dass das Arbeitstiefeneinstellorgan und das Stützrad mittels gelöster Verriegelungsvorrichtung zwischen Radarm und Koppelelement außer Wirkverbindung bringbar sind. Die Kopplung zwischen Radarm Arbeitstiefeneinstellorgan über das Koppelelement ist somit aufgehoben und der Radarm kann durch Verwendung des Umsteckmechanismus um die Gelenkachse geschwenkt werden.

In einer weiteren vorteilhaften Weiterbildung der Erfindung ist vorgesehen, dass der Pflugrahmen in Transportstellung mittels des zumindest einem Wendezylinders gegenüber dem Anbaubock in eine um annährend 90 Grad gedrehte Stellung verbringbar ist, so dass das Stützrad unter dem Pflugrahmen eine vom Arbeitstiefeneinstellorgan entkoppelte, um die Drehachse frei verschwenkbare Folgestellung einnimmt. Die Pflugkörper weisen in dieser Transportstellung des Pflugrahmens nach oben, so dass der Anbaudrehpflug über das in Folgestellung befindliche Stützrad hinter der landwirtschaftlichen Zugmaschine in zweckmäßiger Weise lenkbar ist. Der Pflugrahmen stützt sich über die Befestigungsvorrichtung auf dem Stützrad ab, so dass der Anbaudrehpflug nur teilweise von der Zugmaschine getragen wird.

Weitere Einzelheiten der Erfindung sind der Beispielsbeschreibung und den Zeichnungen zu entnehmen. Die Zeichnungen zeigen
- Fig.1: ein Ausführungsbeispiel eines erfindungsgemäßen Anbaudrehpfluges mit einer Befestigungsvorrichtung in Arbeitsstellung in Seitenansicht,
- Fig.2: die Befestigungsvorrichtung gemäß Fig.1 in perspektivischer Ansicht von schräg hinten,
- Fig.3: die Befestigungsvorrichtung gemäß Fig.1 und 2 in einer Zwischenposition in perspektivischer Ansicht,
- Fig.4: eine weitere Ausführungsform der Befestigungsvorrichtung in perspektivischer Ansicht von schräg hinten,
- Fig.5: die Befestigungsvorrichtung gemäß Fig.1 - 3 in Transportposition in Seitenansicht, und
- Fig.6: der Anbaudrehpflug gemäß Fig.1 in Transportstellung in Seitenansicht.

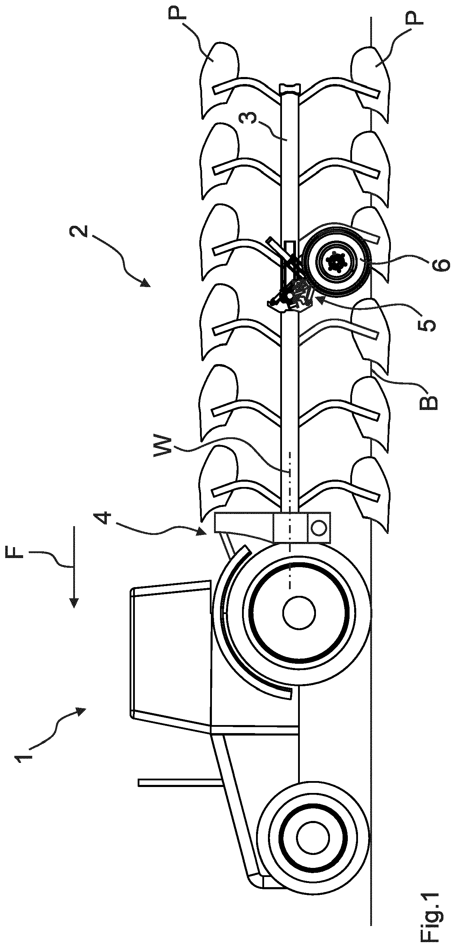

Ein hinter einer landwirtschaftlichen Zugmaschine 1 angebauter Anbaudrehpflug 2 in Arbeitsstellung ist in Fig.1 zu sehen. Der Anbaudrehpflug 2 umfasst einen Pflugrahmen 3 an dessen vorderen Ende ein Anbaubock 4 angeordnet ist über den der Anbaudrehpflug 2 an der Zugmaschine 1 angebaut ist. Ferner weist der Anbaudrehpflug 2 eine erste Ausführungsform einer Befestigungsvorrichtung 5 auf über die ein Stützrad 6 am Pflugrahmen 3 angeordnet ist.

Der Pflugrahmen 3 ist mittels eines zwischen dem Pflugrahmen 3 und dem Anbaubock 4 angeordneten Wendezylinders um eine im Wesentlichen in Fahrtrichtung F liegende Wendeachse W gegenüber dem Anbaubock 4 wendbar. Wie Fig.1 zeigt, sind an zwei gegenüberliegenden Seiten des Pflugrahmens 3 Pflugkörper P angeordnet, so dass mittels des Wendezylinders wahlweise eine der beiden Reihen von Pflugkörpern P in Arbeitstellung des Anbaudrehpfluges 2 in Bodenkontakt bringbar ist. Das über die Befestigungsvorrichtung 5 am Pflugrahmen 3 angeordnete Stützrad 6 kann mittels der Befestigungsvorrrichtung 5 gegenüber dem Pflugrahmen 3 in verschiedene Höhen verbracht werden und rollt auf dem vorzugsweise unbearbeiteten Erdboden B, so dass der Anbaudrehpflug 2 bzw. die in Bodenkontakt befindlichen Pflugkörper P in der Arbeitstiefe im Erdboden B geführt werden.

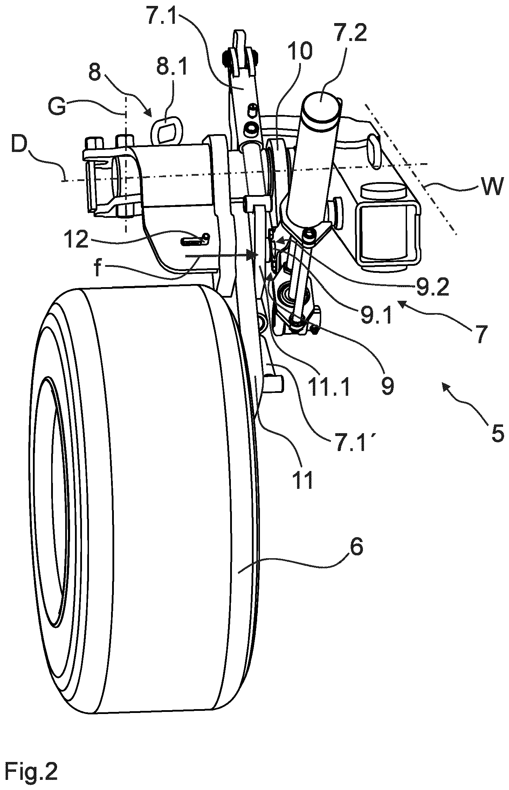

In Fig.2 ist die erste Ausführungsform der Befestigungsvorrichtung 5 in Arbeitsstellung in isolierter perspektivischer Ansicht von schräg hinten zu sehen. Die Befestigungsvorrichtung 5 umfasst eine quer zur Wendeachse W liegende Drehachse D, welche sich in Arbeitsstellung des Anbaudrehpfluges 2 ebenso wie die Wendeachse W im Wesentlichen in horizontaler Richtung erstreckt. Neben der Drehachse D umfasst die Befestigungsvorrichtung 5 ein Arbeitstiefeneinstellorgan 7, einen Umsteckmechanismus 8, eine lösbare Verriegelungsvorrichtung 9 und ein Koppelelement 10. Das Stützrad 6 ist über einen Radarm 11 schwenkbar an der Drehachse D angelenkt. Um das Stützrad 6 in beide Arbeitsstellungen auf gegenüberliegenden Seiten des Pflugrahmens 3 um die Drehachse D schwenkend zu bewegen, steht das Stützrad 6 in Wirkverbindung mit dem Arbeitstiefeneinstellorgan 7, welches in dieser ersten Ausführungsform als Spindel 7.1 ausgeführtes Einstellglied und hydraulischer Dämpfer 7.2 ausgebildet ist. Die Wirkverbindung zwischen Stützrad 6 und Arbeitstiefeneinstellorgan 7 wird hergestellt durch Zusammenwirken der Verriegelungsvorrichtung 9 zwischen dem Radarm 11 und dem Koppelelement 10.

Der hydraulische Dämpfer 7.2 des Arbeitstiefeneinstellorgans 7 ist insbesondere über die Befestigungsvorrichtung einerseits an dem in Fig.2 nicht gezeigten Pflugrahmen 3 und andererseits an dem der Drehachse D abgewandten Ende des Koppelelementes 10 angeordnet. Das Koppelement 10 ist drehbar an der Drehachse D befestigt und über die Verriegelungsvorrichtung 9 lösbar mit dem Radarm 11 gekoppelt, so dass das Stützrad 6 mittels des Arbeitstiefeneinstellorgans 7 über das Koppelelement 10 in die beiden Arbeitsstellungen verbringbar ist. Zur Einstellung der Arbeitstiefe weist diese erste Ausführungsform der Befestigungsvorrichtung 5 die längenveränderliche Spindel 7.1 auf, die in bekannter Weise in seiner Länge einstellbar ist. Die Spindel 7.1 wird in einer am Radarm 11 befestigten Fangklinke 11.1 gefangen und begrenzt so die Schwenkbewegung des Radarms 11 um die Drehachse D nach oben, also effektiv die Höhe des Stützrades 6 gegenüber dem Pflugrahmen 3 und damit die Arbeitstiefe der Pflugkörper P. Beim Wenden des Anbaudrehpfluges 2 gerät die Spindel 7.1 außer Eingriff in der Fangklinke 11.1, so dass der Radarm 11 um die Drehachse D auf die andere Arbeitsseite des Pflugrahmens 3 schwenken kann. Die Schwenkbewegung wird hierbei durch den hydraulischen Dämpfer 7.2, der als Zylinder mit Kolbenbohrung für einen verlangsamten Ölaustausch zwischen den Zylinderseiten ausgeführt ist, gedämpft. Ist der Radarm 11 auf der anderen Seite des Pflugrahmens 3 angekommen wird eine gegenüberliegend angeordnete Spindel 7.1' in der doppelseitig ausgeführten Fangklinke 11.1 am Radarm 11 gefangen, so dass das Stützrad 6 wieder in der Höhe gegenüber dem Pflugrahmen 3 und somit in der Arbeitstiefe eingestellt ist. Durch Lösen der Verriegelungsvorrichtung 9 ist das Arbeitstiefeneinstellorgan 7 außer Wirkverbindung mit dem Stützrad 6 bringbar, indem die Kopplung zwischen Koppelelement 10 und Radarm 11 aufgehoben wird.

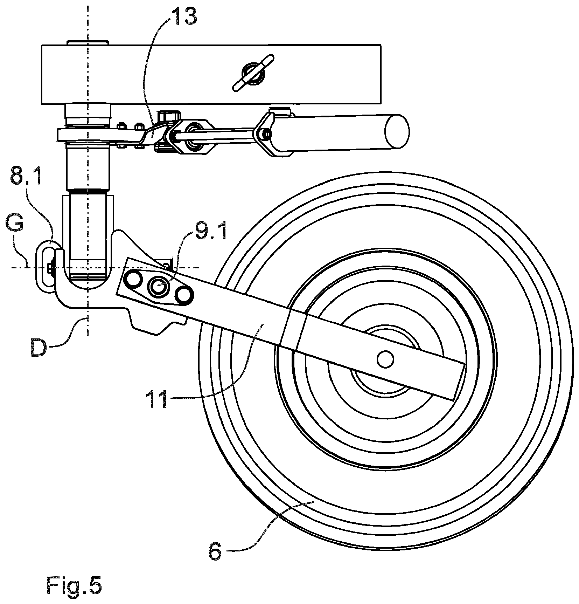

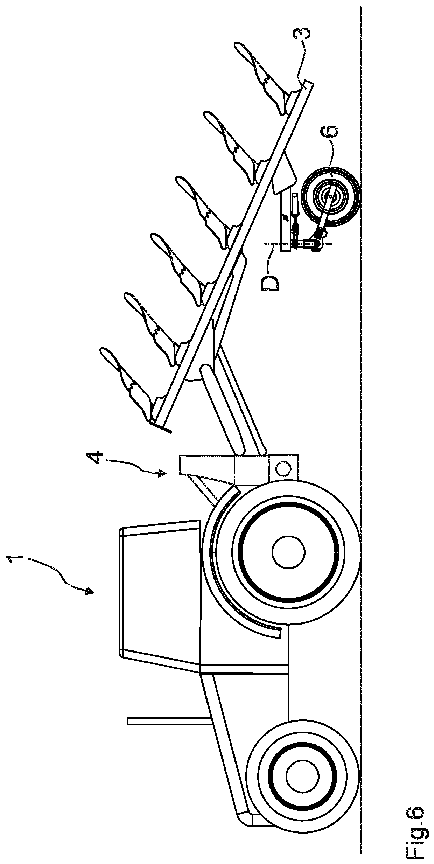

Die Verriegelungsvorrichtung 9 umfasst hierzu einen an dem Radarm 11 angeordneten und entgegen einer Federkraft f verschiebbaren Verriegelungsbolzen 9.1 und eine zu dem Verriegelungsbolzen 9.1 korrespondierende Aufnahme 9.2 am Koppelelement 10. In einer nicht gezeigten Ausführungsform ist eine umgekehrte Anordnung von Verriegelungsbolzen 9.1 und Aufnahme 9.2 ebenso denkbar. Der Verriegelungsbolzen 9.1 ist in der in Fig. 2 gezeigten Arbeitsstellung der ersten Ausführungsform der Befestigungsvorrichtung 5 in der Aufnahme 9.2 aufgenommen und wird mittels der Federkraft f sicher in Anlage in der Aufnahme 9.2 gehalten, so dass der Radarm 11 und das Koppelelement 10 zuverlässig formschlüssig miteinander verbunden sind und gemeinsam um die Drehachse D schwenken können. Der Verriegelungsbolzen 9.1 weist einen durch ein Blech des Umsteckmechanismus 8 ragenden Griff 12 auf mittels dem der Verriegelungsbolzen 9.1 von Hand entgegen der Federkraft f aus der Aufnahme 9.2 verbringbar ist, so dass die Verriegelungsvorrichtung 9 gelöst und das Stützrad 6 außer Wirkverbindung mit dem Arbeitstiefeneinstellorgan 7 gebracht ist. Bei gelöster Verriegelungsvorrichtung 9 lässt sich der Radarm 11 um eine sich quer zu Drehachse D erstreckende Gelenkachse G des Umsteckmechanismus 8 gegenüber der Drehachse D in eine Transportstellung schwenken, wie sie in Fig. 5 und 6 gezeigt ist.

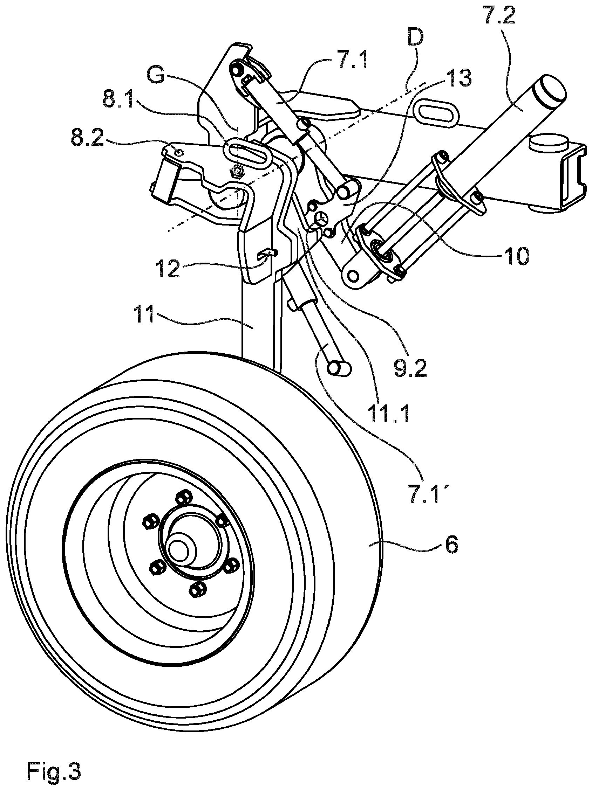

In Fig.3 ist die erste Ausführungsform der Befestigungsvorrichtung 5 in einer Zwischenposition, in der die Verriegelungsvorrichtung 9 gelöst ist, zu sehen. Da der Radarm 11 nicht länger über den Verriegelungsbolzen 9.1 in der Aufnahme 9.2 mit dem Koppelelement 10 verriegelt ist schwenkt der Radarm 11 unter Einwirkung der Schwerkraft um die Drehachse D nach unten und gibt so den Blick auf die Aufnahme 9.2 am Koppelelement 10 frei. Ebenfalls zu sehen ist, dass keine der Spindeln 7.1, 7.1' in Eingriff mit der Fangklinke 11.1 ist und somit der Radarm 11 frei um die Drehachse D schwenken kann. Im Bereich der Aufnahme 9.2 ist eine als Führungsblech 13 ausgebildete Einführhilfe am Koppelelement 10 angeordnet. Mittels des Führungsbleches 13 wird bei Verschwenkung des Radarmes 11 gegenüber dem Koppelelement 10 oder umgekehrt der Verriegelungsbolzen 9.2 entgegen der Federkraft f ausgelenkt, so dass, wenn der Radarm 11 und das Koppelelement 10 sich in derselben Schwenkstellung gegenüber der Drehachse D befinden, der Verriegelungsbolzen 9.2 in die Aufnahme 9.2 einführbar ist.

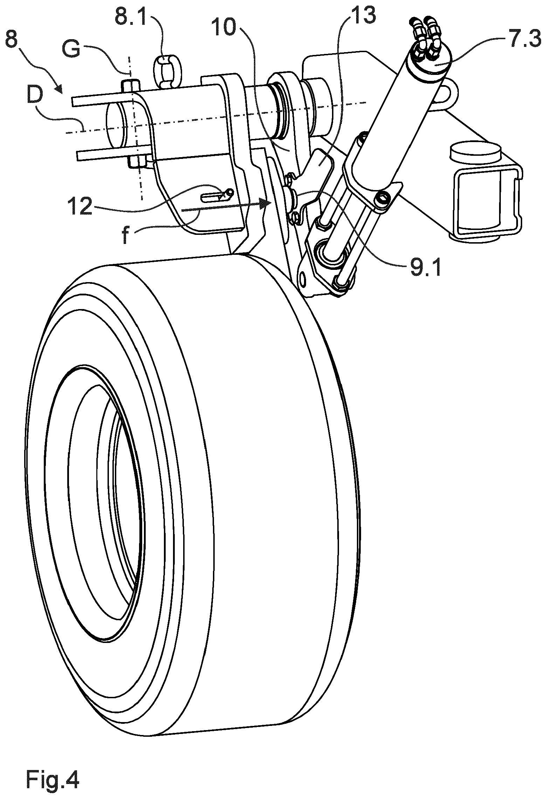

In Fig. 4 ist eine zweite Ausführungsform der Befestigungsvorrichtung 5 von schräg hinten zu sehen, wobei das Arbeitstiefeneinstellorgan 7 als Hydraulikzylinder 7.3 ausgeführt ist. Die Spindeln 7.1, 7.1' und der hydraulische Dämpfer 7.2, sowie die Fangklinke 11.1 am Radarm 11 entfallen in der zweiten Ausführungsform der Befestigungsvorrichtung 5 und werden durch den Hydraulikzylinder 7.3 ersetzt. Die übrigen Komponenten bleiben erhalten und werden analog mit gleichen Bezugszeichen gekennzeichnet.

In der zweiten Ausführungsform der Befestigungsvorrichtung 5 ist das Koppelelement 10 mittels des einerseits gelenkig am Pflugrahmen 3 und andererseits gelenkig am der Drehachse D abgewandten freien Ende des Koppelelementes 10 angeordneten Hydraulikzylinders 7.3 fernbetätigt um die Drehachse D schwenkbar. Mittels des als Hydraulikzylinder 7.3 ausgeführten Arbeitstiefeneinstellorgans 7 ist somit das Koppelelement 10 in dieselbe Schwenkstellung gegenüber der Drehachse D wie der Radarm 11 verbringbar, so dass in vorstehend beschriebener Weise der Verriegelungsbolzen 9.2 über die als Führungsblech 13 ausgeführte Einführhilfe in die Aufnahme 9.2 einführbar ist. In dieser Ausführungsform ist das Stützrad 6 über die Wirkverbindung zum Hydraulikzylinder 7.3, welche mittels der Verriegelungsvorrichtung 9 zwischen Radarm 11 und Koppelelement 10 besteht, gegenüber dem Pflugrahmen 3 in der Höhe verstellbar und somit in der Arbeitstiefe regulierbar. In Arbeitsstellung ist der Radarm 11 folglich mittels der Verriegelungsvorrichtung 9 lösbar mit dem Koppelelement 10 verriegelt.

Um den Radarm 11 aus der Arbeitsstellung in die gegenüber der Drehachse D mittels der Gelenkachse G um etwa 90 Grad verschwenkte Transportstellung zu verbringen, wie in Fig.5 gezeigt, ist der Umsteckmechanismus 8 vorgesehen. Der Umsteckmechanismus 8 umfasst in beiden zuvor beschriebenen Ausführungsformen einen Sicherungsstift 8.1 und jeweils eine Sicherungsstiftaufnahme 8.2 in Arbeitsstellung und in Transportstellung des Radarms 11. Je nachdem in welcher Stellung sich der Radarm 11 gegenüber der Drehachse D befindet gerät entweder die Sicherungstiftaufnahme 8.2 für die Arbeitsstellung oder für die Transportstellung in Deckung mit einer Bohrung in der Drehachse D, so dass durch Einstecken des Sicherungsstifts 8.1 in das Paar aus Sicherungsstiftaufnahme 8.2 und Bohrung der Radarm 11 wahlweise in Arbeitsstellung oder Transportstellung gegenüber der Gelenkachse G festsetzbar ist. Die mit der Sicherungsstiftaufnahme 8.2 in Deckung zu bringende Bohrung kann auch neben der Drehachse vorgesehen sein.

Die Verbringung des Radarms 11 aus der Arbeitsstellung gemäß Fig.1, 2 und 4 in die Transportstellung gemäß Fig. 5 und 6 erfolgt also folgendermaßen: Zuerst ist die Verriegelungsvorrichtung 9 zwischen Radarm 11 und Koppelelement 10 durch Auslenken des Verriegelungsbolzens 9.1 mit Hilfe des Griffes 12 entgegen der Federkraft f zu lösen, so dass das Arbeitstiefeneinstellorgan 7 und das Stützrad 6 außer Wirkverbindung geraten. Der Radarm 11 schwenkt in der Folge in die in Fig.3 dargestellte Zwischenposition herab. Der Radarm 11 ist hierbei mittels des Sicherungsstifts 8.1 gegenüber der Drehachse D um die Gelenkachse G fixiert. Daraufhin ist der Sicherungsstift 8.1 aus der Sicherungsstiftaufnahme 8.2 für die Arbeitsstellung, welche in Deckung mit einer korrespondierenden Bohrung in der Drehachse D war, zu entfernen. Der Radarm 11 ist nun gegenüber der Drehachse D um die Gelenkachse G schwenkbar. Durch Schwenkung des Radarms 11 um etwa 90 Grad um die Gelenkachse G gerät die Sicherungsstiftaufnahme 8.2 für die Transportstellung in Deckung mit der Bohrung in der Drehachse D, so dass der Sicherungsstift 8.1 wieder einsteckbar ist. Hierzu kann an dem Umsteckmechanismus 8 ein als Schlüsselfläche ausgeführter nicht gezeigter Werkzeugansatz ausgebildet sein, über den der Radarm 11 mithilfe eines beispielsweise als Maulschlüssel ausgebildeten Werkzeuges zwischen Arbeitsstellung und Transportstellung verbringbar ist, sprich die Verschwenkung von etwa 90 Grad des Radarms 11 in erleichterter Weise zu bewerkstelligen ist. Durch Wiedereinstecken des Sicherungsstifts 8.1 ist der Radarm 11 in der in Fig.5 gezeigten Position gegenüber der Drehachse D um die Gelenkachse G fixiert. Wird nun der Pflugrahmen 3 mittels des Wendezylinders gegenüber dem Anbaubock 4 in eine um annährend 90 Grad um die Wendeachse W gedrehte Stellung verbracht, wie in Fig. 6 gezeigt, so befindet sich das Stützrad 6 unter dem Pflugrahmen 3 in einer vom Arbeitstiefeneinstellorgan 7 entkoppelten, um die Drehachse D frei verschwenkbaren Folgestellung. Der Anbaudrehpflug 2 kann somit Lenkmanövern der landwirtschaftlichen Zugmaschine 1 folgen, da der Pflugrahmen 3 sich auf dem um die Drehachse D schwenkbaren Stützrad 6 abstützt.

### Bezugszeichenliste

- 1: Zugmaschine
- 2: Anbaudrehpflug
- 3: Pflugrahmen
- 4: Anbaubock
- 5: Befestigungsvorrichtung
- 6: Stützrad
- P: Pflugkörper
- F: Fahrtrichtung
- W: Wendeachse
- B: Erdboden
- 7: Arbeitstiefeneinstellorgan
- 7.1, 7.1': Spindel
- 7.2: hydraulischer Dämpfer
- 7.3: Hydraulikzylinder
- 8: Umsteckmechanismus
- 8.1: Sicherungsstift
- 8.2: Sicherungsstiftaufnahme
- 9: Verriegelungsvorrichtung
- 9.1: Verriegelungsbolzen
- 9.2: Aufnahme
- 10: Koppelelement
- 11: Radarm
- 11.1: Fangklinke
- f: Federkraft
- 12: Griff
- G: Gelenkachse
- 13: Führungsblech

## Patentansprüche

1. Anbaudrehpflug (2) umfassend ein Stützrad (6), eine Befestigungsvorrichtung (5) für das Stützrad (6), einen Anbaubock (4) und einen Pflugrahmen (3), wobei der Pflugrahmen (3) mittels zumindest eines Wendezylinders um eine liegende Wendeachse (W) gegenüber dem Anbaubock (4) wendbar ist, und das Stützrad (6) über die Befestigungsvorrichtung (5) am Pflugrahmen (3) angeordnet ist, wobei die Befestigungsvorrichtung (5) eine quer zur Wendeachse (W) liegende Drehachse (D), ein Arbeitstiefeneinstellorgan (7), einen Umsteckmechanismus (8) und eine lösbare Verriegelungsvorrichtung (9) umfasst, wobei das an einem schwenkbar an der Drehachse (D) angelenkten Radarm (11) angeordnete Stützrad (6) mittels des Arbeitstiefeneinstellorgans (7) in beide Arbeitsstellungen auf gegenüberliegende Seiten des Pflugrahmens (3) um die Drehachse (D) schwenkend bewegbar ist und das Arbeitstiefeneinstellorgan (7) mittels der Verriegelungsvorrichtung (9) aus der Wirkverbindung mit dem Stützrad (6) bringbar ist, wobei der Umsteckmechanismus (8) eine sich quer zur Drehachse (D) erstreckende Gelenkachse (G) aufweist, um die der Radarm (11), vorzugsweise bei gelöster Verriegelungsvorrichtung (9), gegenüber der Drehachse (D) in eine Transportstellung schwenkbar ist, wobei die Befestigungsvorrichtung (5) ein, vorzugsweise drehbar an der Drehachse (D) befestigtes, Koppelelement (10) umfasst, **dadurch gekennzeichnet, dass** das Arbeitstiefeneinstellorgan (7) einerseits an dem Pflugrahmen (3) und andererseits an dem Koppelelement (10) und die Verriegelungsvorrichtung (9) zwischen dem Radarm (11) und dem Koppelelement (10) angeordnet ist.

2. Anbaudrehpflug (2) nach Anspruch 1, **dadurch gekennzeichnet, dass** die Verriegelungsvorrichtung (9) einen am Radarm (11) oder Koppelelement (10) angeordneten, vorzugsweise entgegen einer Federkraft (f) verschiebbaren, Verriegelungsbolzen (9.1) und eine Aufnahme (9.2) für den Verriegelungsbolzen (9.1) am Koppelelement (10) oder Radarm (11) umfasst.

3. Anbaudrehpflug (2) nach Anspruch 2, **dadurch gekennzeichnet, dass** im Bereich der Aufnahme (9.2) am Koppelelement (10) oder am Radarm (11) eine Einführhilfe (13) angeordnet ist, so dass der Verriegelungsbolzen (9.1) mittels des Arbeitstiefeneinstellorgans (7) in die Aufnahme (9.2) einführbar ist.

4. Anbaudrehpflug (2) nach zumindest einem der vorstehenden Ansprüche, **dadurch gekennzeichnet, dass** das Arbeitstiefeneinstellorgan (7) als Hydraulikzylinder (7.3) ausgeführt ist.

5. Anbaudrehpflug (2) nach zumindest einem der Ansprüche 1 bis 3, **dadurch gekennzeichnet, dass** das Arbeitstiefeneinstellorgan (7) als längenveränderliches Einstellglied (7.1) und/oder, vorzugsweise hydraulischer, Dämpfer (7.2) ausgeführt ist.

6. Anbaudrehpflug (2) nach zumindest einem der vorstehenden Ansprüche, **dadurch gekennzeichnet, dass** der Umsteckmechanismus (8) einen Sicherungsstift (8.1) und zumindest jeweils eine Aufnahme (8.2) für den Sicherungsstift (8.1) in Arbeitsstellung und in Transportstellung des Radarms (11) umfasst, dass je eine Aufnahme (8.2) wahlweise mit zumindest einer Bohrung in und/oder neben der Drehachse (D) in Deckung bringbar ist.

7. Anbaudrehpflug (2) nach zumindest einem der vorstehenden Ansprüche, **dadurch gekennzeichnet, dass** der Radarm (11) in Transportstellung gegenüber der Drehachse (D) um etwa 90 Grad um die Gelenkachse (G) verschwenkt ist.

8. Anbaudrehpflug (2) nach zumindest einem der vorstehenden Ansprüche, **dadurch gekennzeichnet, dass** an dem Umsteckmechanismus (8) ein Werkzeugansatz ausgebildet ist, über den der Radarm (11) mithilfe eines Werkzeuges zwischen Arbeitsstellung und Transportstellung verbringbar ist.

9. Anbaudrehpflug (2) nach zumindest einem der vorstehenden Ansprüche, **dadurch gekennzeichnet, dass** das Arbeitstiefeneinstellorgan (7) gelenkig mit dem Pflugrahmen (3) und gelenkig mit dem, vorzugsweise der Drehachse (D) abgewandten, freien Ende des Koppelelements (10) verbunden ist.

10. Anbaudrehpflug (2) nach zumindest einem der vorstehenden Ansprüche, **dadurch gekennzeichnet, dass** der Radarm (11) in Arbeitsstellung mittels der Verriegelungsvorrichtung (9) lösbar mit dem Koppelelement (10) verriegelt ist.

11. Anbaudrehpflug (2) nach zumindest einem der vorstehenden Ansprüche, **dadurch gekennzeichnet, dass** das Arbeitstiefeneinstellorgan (7) und das Stützrad (6) mittels gelöster Verriegelungsvorrichtung (9) zwischen Radarm (11) und Koppelelement (10) außer Wirkverbindung bringbar sind.

12. Anbaudrehpflug (2) nach Anspruch 7, **dadurch gekennzeichnet, dass** der Pflugrahmen (3) in Transportstellung mittels des zumindest einem Wendezylinders gegenüber dem Anbaubock (4) in eine um annährend 90 Grad gedrehte Stellung verbringbar ist, so dass das Stützrad (6) unter dem Pflugrahmen (3) eine vom Arbeitstiefeneinstellorgan (7) entkoppelte, um die Drehachse (D) frei verschwenkbare Folgestellung einnimmt.

## Claims

1. Mounted turnover plow (2) comprising a support wheel (6), a fastening device (5) for the support wheel (6), a mounting bracket (4) and a plow frame (3), the plow frame (3) being turnable about a horizontal turning axis (W) relative to the mounting bracket (4) by means of at least one turning cylinder, and the support wheel (6) being arranged on the plow frame (3) via the fastening device (5), the fastening device (5) comprising a rotation axis (D) lying transversely to the turning axis (W), a working depth adjustment member (7), a reversing mechanism (8) and a releasable locking device (9), the support wheel (6) arranged on a wheel arm (11) that is pivotably hinged to the rotation axis (D) being pivotally movable about the rotation axis (D) into both working positions on opposite sides of the plow frame (3) by means of the working depth adjustment member (7) and the working depth adjustment member (7) being able to be brought out of operative connection with the support wheel (6) by means of the locking device (9), the reversing mechanism (8) having an articulation axis (G) extending transversely to the axis of rotation (D), about which the support arm (11), preferably when the locking device (9) is released, can be pivoted into a transport position relative to the axis of rotation (D), the fastening device (5) comprising a coupling element (10), preferably rotatably fastened to the axis of rotation (D), **characterized in that** the working depth adjustment member (7) is arranged on the plow frame (3) on one side and on the coupling element (10) on the other side, and the locking device (9) is arranged between the support arm (11) and the coupling element (10).

2. Mounted turnover plow (2) according to claim 1, **characterized in that** the locking device (9) comprises a locking bolt (9.1) arranged on the wheel arm (11) or coupling element (10), which is preferably displaceable against a spring force (f), and a receptacle (9.2) for the locking bolt (9.1) on the coupling element (10) or wheel arm (11).

3. Mounted turnover plow (2) according to claim 2, **characterized in that** an insertion aid (13) is arranged in the region of the receptacle (9.2) on the coupling element (10) or on the wheel arm (11), so that the locking bolt (9.1) can be inserted into the receptacle (9.2) by means of the working depth adjustment member (7).

4. Mounted turnover plow (2) according to at least one of the preceding claims, **characterized in that** the working depth adjustment member (7) is designed as a hydraulic cylinder (7.3).

5. Mounted turnover plow (2) according to at least one of claims 1 to 3, **characterized in that** the working depth adjustment member (7) is designed as a length-variable adjustment member (7.1) and/or, preferably hydraulic, damper (7.2).

6. Mounted turnover plow (2) according to at least one of the preceding claims, **characterized in that** the reversing mechanism (8) comprises a locking pin (8.1) and in each case at least one receptacle (8.2) for the locking pin (8.1) in the working position and in the transport position of the wheel arm (11), and **in that** each receptacle (8.2) can be selectively brought into line with at least one bore in and/or next to the axis of rotation (D).

7. Mounted turnover plow (2) according to at least one of the preceding claims, **characterized in that** the wheel arm (11) is pivoted in the transport position relative to the axis of rotation (D) by approximately 90 degrees about the articulation axis (G).

8. Mounted turnover plow (2) according to at least one of the preceding claims, **characterized in that** a tool attachment is formed on the switching mechanism (8), via which the wheel arm (11) can be moved between the working position and the transport position with the aid of a tool.

9. Mounted turnover plow (2) according to at least one of the preceding claims, **characterized in that** the working depth adjustment member (7) is connected to the plow frame (3) in an articulated manner, and connected to the free end, preferably facing away from the axis of rotation (D), of the coupling element (10) in an articulated manner.

10. Mounted turnover plow (2) according to at least one of the preceding claims, **characterized in that** the wheel arm (11) is releasably locked to the coupling element (10) in the working position by means of the locking device (9).

11. Mounted turnover plow (2) according to at least one of the preceding claims, **characterized in that** the working depth adjustment member (7) and the support wheel (6) can be brought out of operative connection by means of a released locking device (9) between the wheel arm (11) and the coupling element (10).

12. Mounted turnover plow (2) according to claim 7, **characterized in that** the plow frame (3) can be brought into a position rotated by approximately 90 degrees relative to the attachment block (4) in the transport position by means of the at least one turning cylinder, such that the support wheel (6) under the plow frame (3) assumes a subsequent position that is decoupled from the working depth adjustment member (7) and freely pivotable about the axis of rotation (D).

## Revendications

1. Charrue réversible portée (2) comprenant une roue d'appui (6), un dispositif de fixation (5) pour la roue d'appui (6), une tête d'attelage (4) et un châssis de charrue (3), dans laquelle le châssis de charrue (3) peut être retourné à l'aide d'au moins un vérin de retournement autour d'un axe de retournement horizontal (W) par rapport à la tête d'attelage (4), et la roue d'appui (6) est agencée sur le châssis de charrue (3) par l'intermédiaire du dispositif de fixation (5), dans laquelle le dispositif de fixation (5) comprend un axe de rotation (D) transversal à l'axe de retournement (W), un organe de réglage de profondeur de travail (7), un mécanisme de permutation (8) et un dispositif de verrouillage (9) libérable, dans laquelle la roue d'appui (6) agencée sur un bras de roue (11) articulé de manière pivotante sur l'axe de rotation (D) peut être déplacée à l'aide de l'organe de réglage de profondeur de travail (7) dans les deux positions de travail sur des côtés opposés du châssis de charrue (3), de manière pivotante autour de l'axe de rotation (D), et l'organe de réglage de profondeur de travail (7) peut être amené hors de la liaison fonctionnelle avec la roue d'appui (6) à l'aide du dispositif de verrouillage (9), dans laquelle le mécanisme de permutation (8) présente un axe d'articulation (G) s'étendant transversalement à l'axe de rotation (D) autour duquel le bras de roue (11) peut pivoter par rapport à l'axe de rotation (D) dans une position de transport, de préférence lorsque le dispositif de verrouillage (9) est desserré, dans laquelle le dispositif de fixation (5) comprend un élément d'accouplement (10), de préférence fixé de manière rotative sur l'axe de rotation (D), **caractérisée en ce que** l'organe de réglage de profondeur de travail (7) est disposé d'une part sur le châssis de charrue (3) et d'autre part sur l'élément d'accouplement (10), et le dispositif de verrouillage (9) est agencé entre le bras de roue (11) et l'élément d'accouplement (10).

2. Charrue réversible portée (2) selon la revendication 1, **caractérisée en ce que** le dispositif de verrouillage (9) comprend un boulon de verrouillage (9.1) agencé sur le bras de roue (11) ou l'élément d'accouplement (10), de préférence déplaçable à l'encontre d'une force élastique (f), et un logement (9.2) pour le boulon de verrouillage (9.1), le logement se trouvant sur l'élément d'accouplement (10) ou le bras de roue (11).

3. Charrue réversible portée (2) selon la revendication 2, **caractérisée en ce qu'**un accessoire d'introduction (13) est agencé dans la zone du logement (9.2) se trouvant sur l'élément d'accouplement (10) ou sur le bras de roue (11), de sorte que le boulon de verrouillage (9.1) peut être introduit dans le logement (9.2) à l'aide de l'organe de réglage de profondeur de travail (7).

4. Charrue réversible portée (2) selon au moins l'une des revendications précédentes, **caractérisée en ce que** l'organe de réglage de profondeur de travail (7) est réalisé sous la forme d'un vérin hydraulique (7.3).

5. Charrue réversible portée (2) selon au moins l'une des revendications 1 à 3, **caractérisée en ce que** l'organe de réglage de profondeur de travail (7) est réalisé sous la forme d'une pièce de réglage (7.1) à longueur variable et/ou d'un amortisseur (7.2), de préférence hydraulique.

6. Charrue réversible portée (2) selon au moins l'une des revendications précédentes, **caractérisée en ce que** le mécanisme de permutation (8) comprend une goupille de sécurité (8.1) et au moins respectivement un logement (8.2) pour la goupille de sécurité (8.1) en position de travail et en position de transport du bras de roue (11), **en ce que** chaque logement (8.2) peut être mis en concordance au choix avec au moins un perçage dans et/ou à côté de l'axe de rotation (D).

7. Charrue réversible portée (2) selon au moins l'une des revendications précédentes, **caractérisée en ce qu'**en position de transport, le bras de roue (11) est pivoté d'environ 90 degrés autour de l'axe d'articulation (G) par rapport à l'axe de rotation (D).

8. Charrue réversible portée (2) selon au moins l'une des revendications précédentes, **caractérisée en ce qu'**un embout d'outil est formé sur le mécanisme de permutation (8), embout d'outil par lequel le bras de roue (11) peut être déplacé entre la position de travail et la position de transport au moyen d'un outil.

9. Charrue réversible portée (2) selon au moins l'une des revendications précédentes, **caractérisée en ce que** l'organe de réglage de profondeur de travail (7) est relié de manière articulée au châssis de charrue (3) et de manière articulée à l'extrémité libre, de préférence opposée à l'axe de rotation (D), de l'élément d'accouplement (10).

10. Charrue réversible portée (2) selon au moins l'une des revendications précédentes, **caractérisée en ce que** le bras de roue (11) est verrouillé de manière amovible avec l'élément d'accouplement (10) en position de travail, à l'aide du dispositif de verrouillage (9).

11. Charrue réversible portée (2) selon au moins l'une des revendications précédentes, **caractérisée en ce que** l'organe de réglage de profondeur de travail (7) et la roue d'appui (6) peuvent être mis hors de liaison fonctionnelle entre le bras de roue (11) et l'élément d'accouplement (10), à l'aide du dispositif de verrouillage (9) desserré.

12. Charrue réversible portée (2) selon la revendication 7, **caractérisée en ce que** le châssis de charrue (3) peut être amené en position de transport, à l'aide de l'au moins un vérin de retournement, dans une position tournée d'environ 90 degrés par rapport à la tête d'attelage (4), de sorte que la roue d'appui (6) prend, sous le châssis de charrue (3), une position de suivi découplée de l'organe de réglage de profondeur de travail (7) et pouvant pivoter librement autour de l'axe de rotation (D).
